# EUROPEAN PATENT SPECIFICATION

(11) **EP 0 427 432 B1**
(45) Date of publication and mention of the grant of the patent: **16.02.1994**
(21) Application number: 90311796.8
(22) Date of filing: 29.10.1990
(51) Int. Cl.: C02F 1/32

(54) **Apparatus for water treatment**
Vorrichtung zur Wasserreinigung
Dispositif pour le traitement de l'eau

(30) Priority: 28.10.1989 GB 8924331
(43) Date of publication of application: 15.05.1991
(73) Proprietor: Goodson, Malcolm Graham, Peterborough, Cambs (GB)
(72) Inventor: Goodson, Malcolm Graham, Peterborough, Cambs (GB)
(74) Representative: Archer, Philip Bruce

(56) References cited:
- EP-A- 0 202 820
- US-A- 4 141 686
- PATENT ABSTRACTS OF JAPAN, vol. 12, no. 56, 17 February 1988 & JP-A-62 201 687 (IWASAKI ELECTRIC CO.; (LTD) 05-09-1987

## Description

This invention relates to apparatus for the treatment of water from ponds and aquaria with ultra-violet light to effect a cleaning or purifying action thereon.

Apparatus for the ultra-violet treatment of water from ponds and aquaria has been previously proposed, but these prior proposals suffer from several shortcomings. These include their cost, effectiveness and the fact that manufacture is not as simple as it might be.

Among the performance shortcomings of previous proposals is the fact that the treatment of the water is somewhat variable, and while some of the water treated is treated sufficiently, other parts of the same flow are not, and the result is a less than satisfactory performance.

A further factor concerns cost and ease of manufacture. A previously proposed apparatus is made entirely of specially formed or moulded parts. In most instances these are of unecessarily heavy duty construction so that, for both these reasons, the manufacturing cost is unduly high.

A still further factor, somewhat related to those described in the preceding paragraph, concerns the manner of sealing the ultra-violet light-transmitting tube in the apparatus. In the prior proposal, there are provided O-rings which are positioned by end-fitting large screw-threaded collars which clamp the O-rings in position and render them only fully effective for sealing purposes under a certain axial load thus - developed. In consequence, further cost is added to the product and, as a result of the inevitably relatively long axial length of the screw-threaded clamping nuts, there is a significant axial length of the apparatus, and in particular of the ultra-violet light emitting central tube, which is ineffective for water treatment purposes due to its enclosure by the end collars which clamp O-ring.

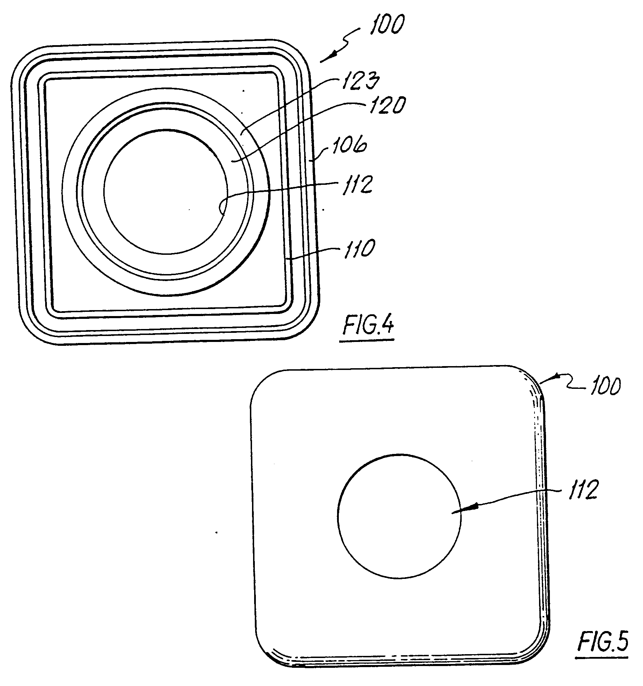

There is disclosed in US-A-4 141 686 apparatus as defined in the pre-characterising portion of claim 1. The disposable liquid steriliser unit described in the patent includes (see Fig 4) a fin 37 forming an integral part of the cylindrical water-carrying duct of the apparatus and projecting inwardly in a non-radial direction from an inner wall thereof to impart turbulence to the water flowing in and out of the duct via its inlet and outlet connections.

EP-A-0 202 820 discloses an ultra violet ray water purifier having a "turbulator" in which the flow path of the water passing through the apparatus is defined between inner and outer cylindrical members of which the outer is provided with inwardly-projecting grooves to produce turbulent flow as the water passes through the thus-defined passages.

Accordingly, I have identified a requirement for water treatment apparatus offering improvements in relation to these previous proposals, notably improvements in relation to the provision of improved and simpler means for producing turbulent water flow and/or improvements in the simplicity and reduced cost of the apparatus and/or improvements therein generally.

According to the invention there is provided water treatment apparatus as defined in the accompanying claims.

In a preferred embodiment, water treatment apparatus comprises a water treatment duct having water inlet and outlet means spaced lengthwise thereof. The water inlet is non-axial, eg radial. A radiation emitting device is located in the duct and extends lengthwise thereof along at least part of the length between the water inlet and outlet means, to effect water treatment while the water passes therebetween. Flow control means is provided in the duct to intercept the water flow and to promote a non-laminar water flow during treatment.

The flow control means is provided by the duct itself. The duct is of non-circular cross-sectional shape, and this in itself promotes non-laminar flow. The duct is of generally rectangular cross-sectional shape. The duct is infact of generally square cross-sectional shape, and the radiation emitting device is located generally on the central axis thereof and extends through end seals in end walls of the duct, and the water inlet and outlet means are in the form of generally radial tubes in the region of each end of the duct.

A further aspect of a preferred embodiment provides water treatment apparatus in which the water treatment duct is provided by a duct of plastics material, or a portion thereof, originally manufactured for other use such as part, for example a downspout, of a rain water disposal system for a building, for example a domestic dwelling house.

In a preferred embodiment, the water treatment duct has simple moulded end caps which close the ends of the chosen length of plastics ducting, provide a simple means of sealing the ducting to the caps, for example by adhesive, and are furnished with openings, sealable by means of O-rings, to receive the central tube in which the ultra-violet light emitting tube is placed. In this way, the advantages of using the available ducting material are combined with the requirements of closing the ends of the ducting and sealing same to the ultra-violet light emitting apparatus with minimum cost and complexity.

In the preferred embodiment, the water inlet and outlet means are provided by means of separately - formed plastics components inserted through openings formed in the water treatment duct and secured by means of internal flanges and external screw-threaded collars, with application of a suitable bonding agent.

A still further aspect of the invention relates to the provision of captive O-rings in the end caps of the water treatment duct which provide a water-tight seal merely on push-fitting the glass tube therein, without the need for a screw-threaded clamping collar to render the seals effective, and without the attendant loss of effective length of the ultra-violet tube.

An embodiment of the invention will now be described by way of example with reference to the accompanying drawings in which :-
Fig 1 shows a longitudinal section through water treatment apparatus; and
Fig 2 shows a cross-section through the apparatus of Fig 1 on the line II-II therein; and
Fig 3 shows, on a larger scale, an axial section through the end cap of the apparatus of Fig 1, and likewise through a water inlet or outlet connection provided in the water treatment duct; and
Figs 4 and 5 show plan views of the inside and outside respectively of the end cap (only) of Fig 3.

As shown in the drawings, water treatment apparatus 10 comprises a water treatment duct 12 having water inlet and outlet means 14, 16 respectively, which are spaced lengthwise of the duct. A radiation emitting device 18 is located in duct 12 and extends lengthwise thereof to emit radiation to effect water treatment while water passes between inlet 14 and outlet 16.

Flow control means 20 is provided in duct 12 to intercept the water flow and promote a non-laminar water flow during treatment.

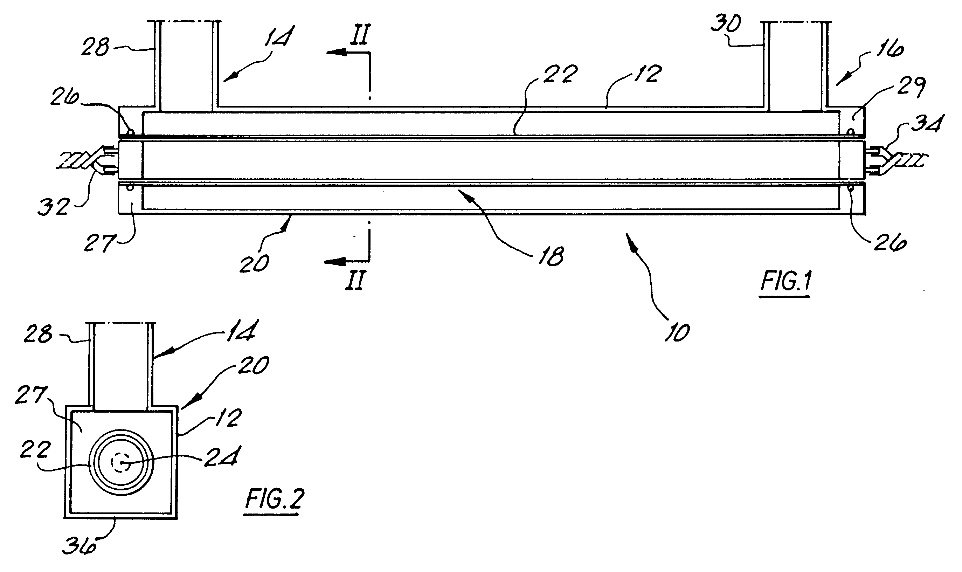

The flow control means 20 is provided by the duct 12 itself which is of generally square cross-sectional shape, as shown in Fig. 2.

Radiation emitting device 18 is in a form of a round-section ultra-violet tube 22 located generally on the central axis 24 of duct 12 and extending through end seals 26 in end walls 27, 29 of the duct. The water inlet and outlet means 14, 16 respectively are in the form of generally radial tubes 28, 30 respectively, in the region of each end of duct 12.

Duct 12 is of plastics material, originally manufactured for use as part, for example a downspout, of a rain water disposal system for a building, for example a domestic dwelling house, and is formed with openings in the region of each end to receive the tubes 28, 30.

As shown in Fig 1, the electrical connections 32, 34 for ultra-violet tube 22 are located at its opposite ends, entirely outside duct 12. Tube 22 itself is of silica-quartz material.

In use, the apparatus 10 is connected to an aquatic installation, such as a pond or aquarium system by suitable duct means (not shown) and an associated pump whereby water is caused to circulate in a path passing from the aquatic installation, through apparatus 10, and thence back to the pond or aquarium. A filter assembly may be mounted in the circuit to remove suspended solids and/or otherwise treat the water.

In use, water entering through inlet 14 does so in a radial direction and after passing around tube 22 necessarily suffers a relatively abrupt change of direction when the flow reaches the planar opposite face 36 of duct 12. The water flow passes axially of duct 12, but due to the generally non-circular profile the water flow is non-laminar. Prior proposals in this field have all provided cylindrical ducts with co-axial cylindrical emitter tubes which cause smooth laminar flow along the duct, whereby the water nearest to the emitter is fully treated, but that which flows along the surface of the duct itself is significantly less treated.

In the present embodiment, the velocity of water flow is such that a degree of turbulence in the flow is caused whereby thorough mixing occurs and relatively uniform treatment of the water results.

In this embodiment, the use of plastic ducting from a rain water disposal system for duct 12 enables this main body of the apparatus to be constructed in a very simple and inexpensive manner. Similarly available smaller diameter ducts are provided for inlet 14 and outlet 16, these being suitably sealed to duct 12 by bonding or welding. The end walls 27, 29 are relatively simple to make.

Interestingly, the above embodiment provides simple yet effective apparatus for ultra-violet treatment of pond and aquarium water. By employing an off-the-shelf square section duct of plastics material the dual advantages of economy of manufacture and efficiency of water treatment are provided simultaneously.

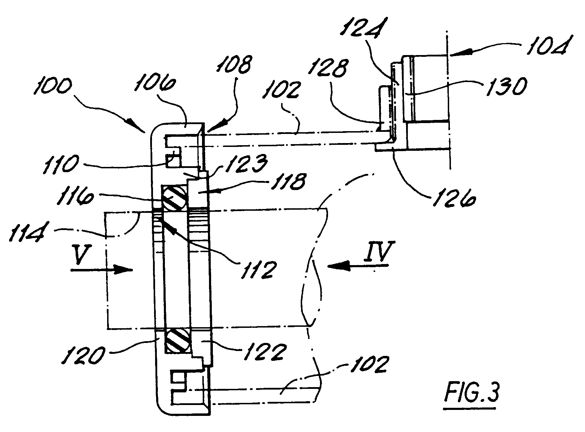

Turning now to the embodiment of Figs 3 to 5, this embodiment is otherwise as constructed in the same manner as the embodiment of Figs 1 and 2, but shows details of the structure of an end cap 100 which closes the opposite ends of the length of square section rainwater ducting 102. The details of the structure of the water inlet and outlet means 104, are likewise shown.

End cap 100 is formed as a plastics moulding. It has an external peripheral flange 106 which is shaped and proportioned to receive the external end surface of duct 102 as a sliding fit therein. A chamfer is formed at the inner edge of flange 106 to form a peripheral reservoir 108 for adhesive employed for bonding duct 102 to end cap 100. An inner flange 110 co-operates with the inner periphery of duct 102, whereby a closely fitting sealed and bonded joint is obtained.

End cap 100 has a circular opening 112 formed therein to receive a cylindrical glass tube, indicated at 114, constituting the radiation emitting or transmitting device. In practice, an ultra-violet light emitting tube is simply located within tube 114.

An O-ring 116 provides a seal between cap 100 and tube 114, the seal actually being made between the O-ring and retaining means 118 for the O-ring.

Retaining means 118 for O-ring 116 comprises a flange 120 surrounding opening 112 (and in fact defining the inner periphery thereof), a retaining ring 122, formed as a separate item and bonded to end cap 100 in the position shown, and a main inner flange 123 which provides a stepped seal for ring 122.

Thus O-ring 116 is captive within the groove defined between flange 120 and retaining ring 122, which constitutes a fixed recess and the dimensions of the seal and of the recess are such that the tube 114 is water-tightly sealed merely by push-fitting same therein, whereby assembly is greatly simplified and the axial length occupied by non ultra-violet transmitting structures is limited to the axial length of end cap 100 and the very minor projection of retaining ring 122 therefrom.

Turning now to the structure of connector 104, it will be seen that this comprises a duct element 124 having a flange 126 at its inner side which is received within duct 102 and lodges behind an opening formed therein. Duct element 124 is formed with an external screw-thread to receive a correspondingly internally screw-threaded collar 128, whereby the connector is secured in place and the apparatus subsequently detachably mounted in a moulded and sealed weather-proof housing for external use. An adhesive composition is employed to render the connector a permanent fixture, and to assist sealing. The smooth internal periphery of duct 124 has received therein a cylindrical adaptor tube 130, suitably bonded in position, and formed with an internal screw-thread whereby. a water supply or discharge hose having an externally screw-threaded end fitting may be simply coupled thereto. Alternatively, an adaptor having a projecting external screw-thread could equally well be provided.

Interestingly, in the above embodiments of Figs 3 to 5 there has been provided apparatus offering considerable simplicity of structure and manufacture and offering significant savings in manufacturing cost, particularly with regard to original materials and the requirement for specialist and specially - moulded components.

## Claims

1. Water treatment apparatus (10) comprising :-
a) a water treatment duct (12);
b) water inlet (14) and outlet (16) means spaced lengthwise of said water treatment duct, and disposed generally radially with respect to the lengthwise axis of said duct;
c) a radiation emitting or transmitting device (18) located in said water treatment duct and extending lengthwise thereof along at least part of the length between said inlet and outlet means to emit or transmit radiation to effect water treatment while water passes therebetween;
d) flow control means (20) being provided in said water treatment duct to intercept the water flow therethrough and to promote non-laminar water flow during treatment; and
e) said flow control means being provided by said duct (12) itself; and
characterised in that
f) said duct is generally rectangular cross-sectional shape, providing flat side faces; and
g) said water inlet means (14) being mounted on one of said flat side faces of said duct (12) so as to direct the water delivered to the apparatus in a direction generally normal to the inner side face of the opposite flat side of said duct so as to intercept same and cause an abrupt change of flow direction and non-laminar flow characteristics.

2. Apparatus according to claim 1 characterised in that said duct (12) is of generally square cross-sectional shape, and said radiation emitting or transmitting device comprises a round-section tube (22) located generally on a central axis of said water treatment duct and extending through end seals (116) in end walls (100) of the duct, and said water inlet and outlet means (14) and (16) are in the form of generally radial tubes, one in the region of each end of said duct.

3. Apparatus according to claim 1 or claim 2 characterised in that said water treatment duct (12) comprises a length of plastics ducting material of constant cross-sectional shape and dimensions, and having an end cap (100) bonded or solvent-welded at each end.

4. Apparatus according to any one of the preceding claims characterised in that said water treatment duct (12) is provided by a duct of plastics material, or a portion thereof, originally manufactured for use as part of a rain water disposal system for a building.

5. Apparatus according to claim 3 or claim 4 characterised in that said end cap (100) is formed as a plastics moulding.

6. Apparatus according to claim 5 characterised in that said end cap (100) is formed with an external peripheral flange (106) shaped and proportioned to receive the external end surface of said length of plastics ducting (12) as a sliding fit therein.

7. Apparatus according to claim 6 characterised in that said external peripheral flange (106) is formed with a chamfer at its inner edge to form a peripheral reservoir for adhesive or bonding material involved in securing the end cap (100) to the plastics ducting material.

8. Apparatus according to any one of claims 3 to 7 characterised in that said end cap (100) has a circular opening (112) to receive a cylindrical tube (22) constituting said radiation emitting or transmitting device, and an O-ring (116) to provide a seal between the end cap and said cylindrical tube, together with retaining means (118) for said O-ring.

9. Apparatus according to claim 8 characterised in that said retaining means (118) for said O-ring comprises a flange (120) surrounding said opening in the end cap, and a retaining ring secured thereto.

10. Apparatus according to any one of the preceding claims characterised in that said water inlet (14) and outlet (16) means, or one of them, comprises an opening formed in said water treatment duct (12) and having a separately formed connector duct element secured therein.

11. Apparatus according to claim 10 characterised in that said connector duct element comprises a flanged duct element bonded in position with said flange inside the water treatment duct (12), and the flanged duct element having a collar screw-threadedly engaging the flanged element.

## Patentansprüche

1. Wasserbehandlungsvorrichtung (10) mit:
a) einer Wasserbehandlungs-Rohrleitung (12);
b) einem Wasserzulaufelement (14) und einem Wasserablaufelement (16), die längs der Wasserbehandlungs-Rohrleitung voneinander beabstandet und in bezug auf die Längsachse der Rohrleitung im allgemeinen radial angeordnet sind;
c) einer Abstrahlungs- oder Strahlenübertragungseinrichtung (18), die in der Wasserbehandlungs-Rohrleitung angeordnet ist und sich längs derselben über zumindest einen Teil der Länge zwischen dem Zulaufelement und dem Ablaufelement erstreckt zur Abgabe oder Übertragung von Strahlen, um eine Behandlung des Wassers zu bewirken, während dieses zwischen den Elementen strömt;
d) einer Durchflußsteuerungsseinrichtung (20), die in der Wasserbehandlungs-Rohrleitung vorgesehen ist zur Unterbrechung des Wasserflusses durch die Leitung und zur Förderung einer nicht-laminaren Strömung während der Behandlung, wobei
e) die Durchfluβsteuerungseinrichtung durch die Rohrleitung (12) selbst gebildet wird;
dadurch gekennzeichnet, daß
f) die Rohrleitung im allgemeinen eine rechteckige Querschnittsform mit flachen Seitenflächen hat und daß
g) das Wasserzulaufelement (14) an einer der flachen Seitenflächen der Rohrleitung (12) derart montiert ist, daß das zur Vorrichtung geleitete Wasser in eine Richtung gelenkt wird, die im allgemeinen senkrecht zu der inneren Seitenfläche der gegenüberliegenden flachen Seite der Rohrleitung verläuft, so daß das Wasser dort abgefangen wird und eine abrupte Änderung der Strömungsrichtung und nicht-laminare Strömungseigenschaften bewirkt werden.

2. Vorrichtung nach Anspruch 1, dadurch gekennzeichnet, daß die Rohrleitung (12) eine allgemein quadratische Querschnittsform hat und daß die Abstrahlungs- oder Strahlen-übertragungseinrichtung eine Röhre (22) mit rundem Querschnitt umfaßt, die im allgemeinen an der zentralen Achse der Wasserbehandlungs-Rohrleitung angeordnet ist und sich durch Enddichtungen (116) in Endwänden (100) der Rohrleitung erstreckt, und daß das Wasserzulaufelement (14) und das Wasserablaufelement (16) in Form von im allgemeinen radialen Rohren vorgesehen sind, wovon sich je eines in dem Bereich eines jeden Endes der Rohrleitung befindet.

3. Vorrichtung nach Anspruch 1 oder 2, dadurch gekennzeichnet, daß die Wasserbehandlungs-Rohrleitung (12) eine Länge eines Kunststoff-Rohrleitungsmaterials mit konstantem Querschnitt und konstanten Abmessungen umfaßt und mit einer Endabdeckung (100) versehen ist, die durch Kleben oder Quellschweißen an jedem Ende befestigt ist.

4. Vorrichtung nach einem der vorhergehenden Ansprüche, dadurch gekennzeichnet, daß die Wasserbehandlungs-Rohrleitung (12) durch eine Kunststoff-Rohrleitung gebildet wird, wovon ein Abschnitt ursprünglich zur Verwendung als Teil eines Regenwasserablaufsystems für ein Gebäude hergestellt wurde.

5. Vorrichtung nach Anspruch 3 oder 4, dadurch gekennzeichnet, daß die Endabdeckung (100) ein Kunststoff-Formteil ist.

6. Vorrichtung nach Anspruch 5, dadurch gekennzeichnet, daß die Endabdeckung (100) mit einem äußeren umfangsseitigen Flansch (106) versehen ist, der so geformt und bemessen ist, daß er die äußere Endfläche dieser Länge der Kunststoff-Rohrleitung (12) unter Gleitpassung aufnehmen kann.

7. Vorrichtung nach Anspruch 6, dadurch gekennzeichnet, daß der äußere umfangsseitige Flansch an seiner Innenkante mit einer Schräge zur Bildung eines umfangsseitigen Reservoirs für Klebe- oder Haftmaterial versehen ist, das bei der Festlegung der Endabdeckung (100) an dem Kunstoff-Rohrleitungsmaterial verwendet wird.

8. Vorrichtung nach einem der Ansprüche 3 bis 7, dadurch gekennzeichnet, daß die Endabdeckung (100) eine kreisrunde Öffnung (112) zur Aufnahme einer die Abstrahlungs- oder Strahlenübertragungseinrichtung bildenden zylindrischen Röhre (22) und einen Dichtungsring (116) aufweist, der zusammen mit einem Mittel (118) zum Halten des Dichtungsrings für eine Abdichtung zwischen der Endabdeckung und dem zylindrischen Rohr sorgt.

9. Vorrichtung nach Anspruch 8, dadurch gekennzeichnet, daß das Mittel (118) zum Halten des Dichtungsrings einen die Öffnung in der Endabdeckung umschließenden Flansch (120) und einen an diesem festgelegten Haltering umfaßt.

10. Vorrichtung nach einem der vorhergehenden Ansprüche, dadurch gekennzeichnet, daß das Wasserzulaufelement (14) und das Wasserablaufelement (16) oder eines derselben eine in der Wasserbehandlungs-Rohrleitung (12) ausgebildete Öffnung ist und ein in dieser Öffnung festgelegtes Anschlußrohrelement aufweist.

11. Vorrichtung nach Anspruch 10, dadurch gekennzeichnet, daß das Anschlußrohrelement ein geflanschtes Rohrelement ist, das in seiner Lage mit dem Flansch in der Wasserbehandlungs-Rohrleitung (12) verbunden ist, und daß das geflanschte Rohrelement einen Bund hat, der mit dem geflanschten Element verschraubt ist.

## Revendications

1. Appareil (10) de traitement d'eau, comprenant :
a) un conduit (12) de traitement d'eau,
b) des dispositifs d'entrée (14) et de sortie (16) d'eau, espacés le long du conduit de traitement d'eau et disposés de façon générale en direction radiale par rapport à l'axe longitudinal du conduit,
c) un dispositif (18) d'émission ou de transmission d'un rayonnement, placé dans le conduit de traitement d'eau et placé suivant sa longueur le long d'une partie au moins du tronçon formé entre les dispositifs d'entrée et de sortie afin qu'un rayonnement soit émis ou transmis et assure le traitement de l'eau lorsque l'eau circule entre eux, et
d) des moyens (20) de réglage d'écoulement placés dans le conduit de traitement d'eau et destinés à intercepter le courant d'eau qui s'écoule dans le conduit et à favoriser un écoulement non laminaire de l'eau pendant son traitement,
e) les moyens de réglage d'écoulement étant formés par le conduit (12) lui-même, et
caractérisé en ce que :
f) le conduit a une section de configuration générale rectangulaire, ayant des faces latérales plates, et
g) les moyens (14) d'entrée d'eau sont montés sur l'une des faces latérales plates du conduit (12) afin qu'ils dirigent l'eau transmise à l'appareil en direction perpendiculaire de façon générale à la face latérale interne de la face plate opposée du conduit de manière à l'intercepter et provoque un changement brutal de direction d'écoulement et donne des caractéristiques d'écoulement non laminaire.

2. Appareil selon la revendication 1, caractérisé en ce que le conduit (12) a une configuration générale carrée en coupe, et le dispositif d'émission ou de transmission d'un rayonnement comprend un tube (22) de section circulaire disposé de façon générale sur un axe central du conduit de traitement d'eau et s'étendant au travers des joints d'extrémité (116) formés dans des parois (100) d'extrémité du conduit, et les dispositifs d'entrée et de sortie (14, 16) d'eau sont sous forme de tubes d'orientation générale radiale, placés chacun dans une région d'une extrémité du conduit.

3. Appareil selon la revendication 1 ou 2, caractérisé en ce que le conduit (12) de traitement d'eau comporte un tronçon de matière plastique de conduit de configuration et de dimensions constantes en coupe et ayant un capuchon (100) d'extrémité qui est collé ou soudé par un solvant à chaque extrémité.

4. Appareil selon l'une quelconque des revendications précédentes, caractérisé en ce que le conduit (12) de traitement d'eau est formé par un conduit de matière plastique ou une partie d'un tel conduit, fabriqué à l'origine pour être utilisé comme partie d'un ensemble d'évacuation des eaux de pluie d'un bâtiment.

5. Appareil selon la revendication 3 ou 4, caractérisé en ce que le capuchon (100) d'extrémité est sous forme de matière plastique moulée.

6. Appareil selon la revendication 5, caractérisé en ce que le capuchon d'extrémité (100) est formé d'une collerette périphérique externe (106) dont la configuration et les proportions permettent la coopération avec la surface externe d'extrémité du tronçon de matière plastique (12) par emmanchement coulissant.

7. Appareil selon la revendication 6, caractérisé en ce que la collerette périphérique externe (106) est réalisée avec un chanfrein sur son bord interne afin qu'un réservoir périphérique d'adhésif ou de matière de collage soit formé pour la fixation du capuchon d'extrémité (100) à la matière plastique du conduit.

8. Appareil selon l'une des revendications 3 à 7, caractérisé en ce que le capuchon d'extrémité (100) a une ouverture circulaire (112) pour le logement d'un tube cylindrique (22) constituant le dispositif d'émission ou de transmission d'un rayonnement, et un joint torique (116) destiné à former un joint d'étanchéité entre le capuchon d'extrémité et le tube cylindrique, avec un dispositif (118) de retenue du joint torique.

9. Appareil selon la revendication 8, caractérisé en ce que le dispositif de retenue (118) du joint torique comporte une collerette (120) entourant l'ouverture du capuchon d'extrémité, et un anneau de fixation qui lui est fixé.

10. Appareil selon l'une quelconque des revendications précédentes, caractérisé en ce que les moyens d'entrée (14) et de sortie (16) d'eau ou l'un d'eux comportent une ouverture formée dans le conduit (12) de traitement d'eau et ayant un élément de conduit de raccordement formé séparément et qui lui est fixé.

11. Appareil selon la revendication 10, caractérisé en ce que l'élément de conduit de raccordement comprend un élément de conduit à collerette collé en position, la collerette étant à l'intérieur du conduit (12) de traitement d'eau, et l'élément de conduit à collerette ayant un collier coopérant par vissage avec l'élément à collerette.
